# EUROPÄISCHE PATENTSCHRIFT

(11) **EP 3 138 659 B1**
(45) Veröffentlichungstag und Bekanntmachung des Hinweises auf die Patenterteilung: **24.01.2018**
(21) Anmeldenummer: 16401053.0
(22) Anmeldetag: 30.08.2016
(51) Int. Cl.: B23P 15/00, A01C 15/00, B21D 5/00, B21D 35/00, B21D 51/10

(54) **VERFAHREN FÜR BEHÄLTERFERTIGUNG EINER VERTEILMASCHINE**
METHOD FOR MANUFACTURING A HOPPER OF A DISTRIBUTION MACHINE
PROCÉDÉ DE FABRICATION D'UNE TRÉMIE D'ÉPANDEUR

(30) Priorität: 04.09.2015 DE 102015114818
(43) Veröffentlichungstag der Anmeldung: 08.03.2017
(73) Patentinhaber: Amazonen-Werke H. Dreyer GmbH & Co. KG, 49205 Hasbergen (DE)
(72) Erfinder: Krabbe, Ulrich, 49205 Hasbergen (DE); Lampert, Tobias, 49545 Tecklenburg (DE)

(56) Entgegenhaltungen:
- EP-A1- 0 951 814
- EP-A1- 2 634 548
- EP-A2- 0 429 864
- DE-A1- 4 419 504
- DE-A1-102010 000 298
- JP-A- S57 124 580

## Beschreibung

Die Erfindung betrifft ein Verfahren für die Behälterfertigung einer Verteilmaschine gemäß des Oberbegriffes des Patentanspruches 1.

Üblicher Weiser geschieht die Behälterfertigung eines Streuers zum Herstellen eines Behälters durch Umformung zumindest eines planen und in Form zugeschnittenen Stahlbleches zu einem Behälter oder Teilbehälter, wobei der untere Bereich aus einem nichtrostendendem Stahlblech bestehen soll, in der Weise, dass der untere aus nichtrostendendem Stahlblech, beispielsweise Edelstahl, bestehende Bereich an den oberen aus rostendem Stahlblech bestehenden Bereich angeschraubt oder angeschweißt wird, nach dem diese beiden Bereiche nach dem Zuschneiden jeweils separat durch einen Umformvorgang in die entsprechende Form gebracht worden sind. Dieses Fertigungsverfahren ist relativ aufwändig. Die EP 0 429 864 A2 offenbart ein solches Fertigungsverfahren.

Aufgrund der Tatsache, dass der untere Bereich des Behälters einer Verteilmaschine, wie beispielsweise eines Streuers einem sehr hohen Verschleiß sowie auch einer sehr starken Korrosion unterliegt, wird der untere Bereich des Behälters aus nichtrostendem Stahlblech hergestellt. Den gesamten Behälter aus nichtrostendem Stahlblech herzustellen ist sehr teuer und kommt aus Kostengründen nicht infrage. Aus diesem Grunde wird das vorstehende Fertigungsverfahren angewendet.

Der Erfindung liegt die Aufgabe zu Grunde, in einfacher Weise einen preiswert herzustellenden Behälter zu schaffen, bei dem der untere Behälterbereich aus nichtrostendem Stahlblech und der übrige Behälterbereich aus rostendem Stahlblech bestehen.

Diese Aufgabe wird durch folgende Schritte gelöst:
- Zuschneiden eines aus rostendem Stahlblech bestehenden oberen Behälterteiles oder Teilbehälterteiles,
- Zuschneiden eines aus nichtrostendem Stahlblech bestehenden unteren Behälterteiles oder Teilbehälterteiles,
- Verschweißen des aus rostendem Stahlblech bestehenden oberen Behälterteiles oder Teilbehälterteiles mit dem aus nicht rostendem Stahlblech bestehenden unteren Behälterteil oder Teilbehälterteil mittels eines Laserschweißverfahrens,
- Verformen der miteinander verschweißten Behälterteile oder Teilbehälterteile zu dem Behälter oder Teilbehälter durch ein Umformverfahren.

Infolge dieser Maßnahmen lässt sich in fertigungstechnisch einfacher Weise vor dem Verformen der planen Blechteile jeweils ein entsprechender Zuschnitt aus den unterschiedlichen Stahlqualitäten bestehender Blechteile herstellen und anschließend zusammenschweißen. Anschließend findet die Umformung des gesamten Behälters bzw. Teilbehälters, welches im oberen Bereich aus rostendem Stahlblech und im unteren Bereich aus nichtrostendem Stahlblech besteht, statt. Durch das angewendete Laserschweißverfahren wird nur sehr wenig Wärme in die Teile eingebracht, so dass quasi kein Verzug durch das Schweißen entsteht.

Die Umformung der planen Behälterbleche zu dem Behälter bzw. Teilbehälter lässt sich dadurch umsetzen, dass durch ein Abkantverfahren die Formgebung des Behälters oder Teilbehälterteiles folgt.

Weitere Einzelheiten der Erfindung sind der Beispielsbeschreibung und den Zeichnungen zu entnehmen. Die Zeichnungen zeigen
- Fig.1: die Zuschnitte der planen Bleche für den oberen und unteren Teil eines Teilbehälters, der einer Behälterhälfte entspricht, vor dem Verschweißen in Draufsicht und in geringer auseinander gezogener Darstellung der unteren und oberen Bleche,
- Fig.2: der Bereich zwischen dem oberen und unteren Blech der Zuschnitte für die Behälterhälfte in der Darstellung gemäß Fig.1, jedoch im vergrößerten Maßstab,
- Fig.3: die Zuschnitte der planen Bleche für den oberen und unteren Teil eines Teilbehälters, der einer Behälterhälfte entspricht, nach dem Verschweißen in Draufsicht,
- Fig.4: der Bereich zwischen dem oberen und unteren Blech der Zuschnitte für die Behälterhälfte in der Darstellung gemäß Fig.1, jedoch im vergrößerten Maßstab und
- Fig.5: die miteinander verschweißten oberen und unteren Bleche der Zuschnitte nach der Umformung zu einer Behälterhälfte durch ein Abkantverfahren.

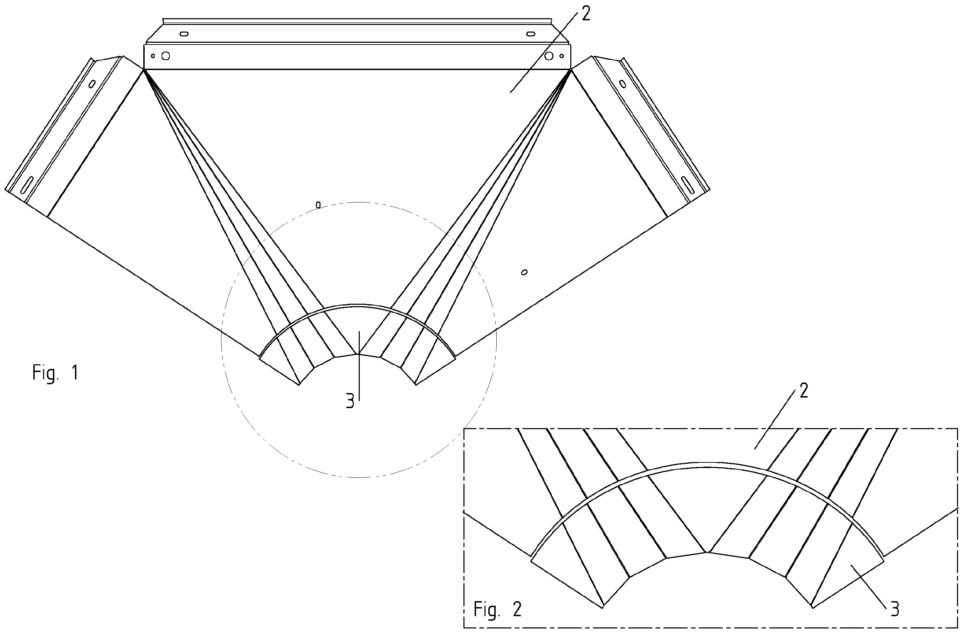

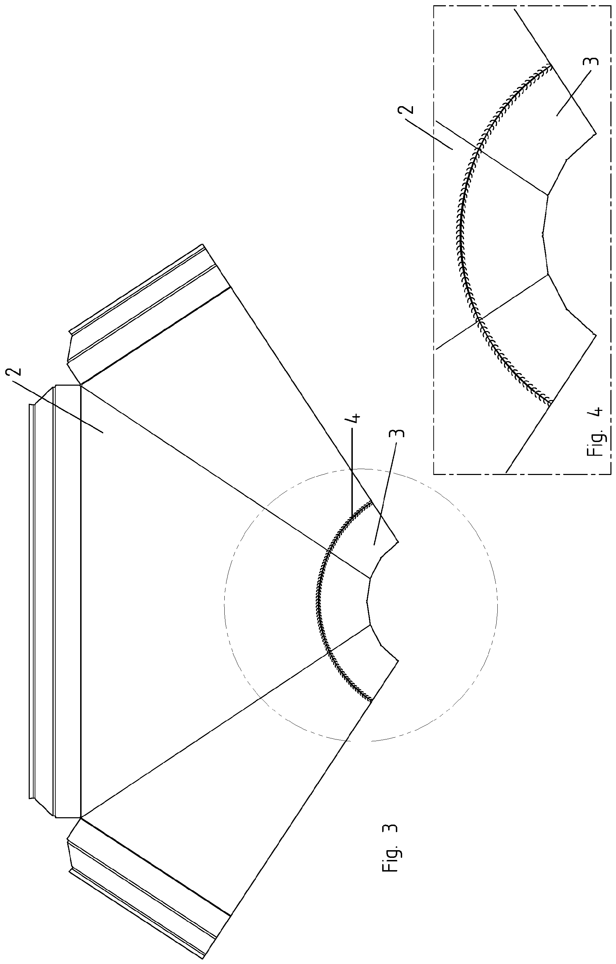

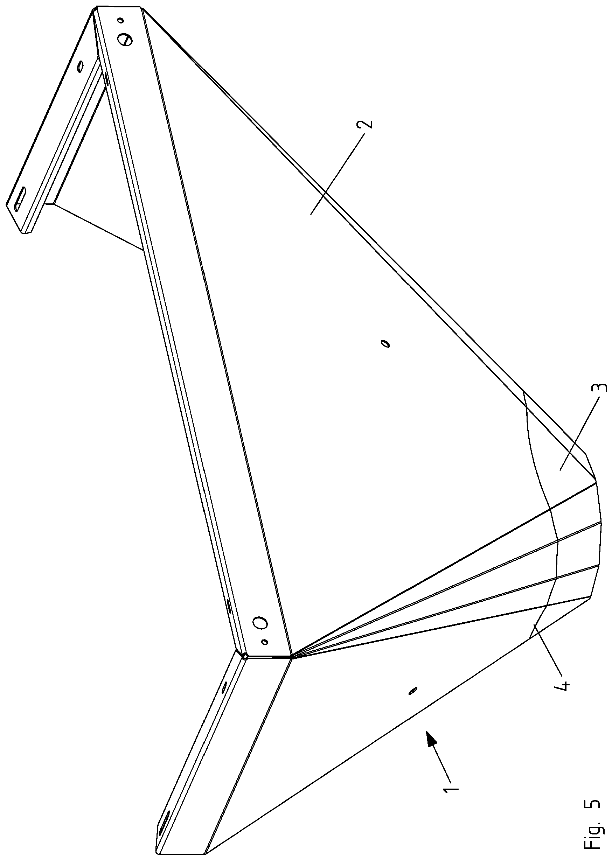

Der Behälter für eine Verteilmaschine, hier in Ausführungsbeispiel für einen Streuer kann beispielsweise aus zwei, auch als Teilbehälter zu bezeichnen, Behälterhälften 1, wie einen davon in Fig.5 dargestellt ist, bestehen. Die beiden Behälterhälften für einen Behälter sind spiegelbildlich ausgebildet und werden durch verschweißen miteinander zu einem Behälter für einen Streuer in bekannter Weise zusammengesetzt. Zur Schaffung einer Behälterhälfte 1, wie in Fig.5 dargestellt, wird folgendermaßen schrittweise vorgegangen:
Zunächst erfolgt das Zuschneiden eines aus rostendem Stahlblech bestehenden oberen Behälterteiles oder Teilbehälterteiles 2 sowie das Zuschneiden eines aus nichtrostendem Stahlblech bestehenden unteren Behälterteiles oder Teilbehälterteiles 3. Hierbei entstehen die in Fig. 1 und 2 dargestellten Zuschnitte 2 und 3. Anschließend erfolgt das Verschweißen des aus rostendem Stahlblech bestehenden oberen Behälterteiles oder Teilbehälterteiles 2 mit dem aus nichtrostendem Stahlblech bestehenden unteren Behälterteil oder Teilbehälterteil 3 mittels eines Laserschweißverfahrens durch die Schweißnaht 4, wie dies in den Fig. 3 und 4 dargestellt ist.

Nach dem Verschweißen der Teilbereiche 2 und 3 des Behälterteiles oder Teilbehälterteile 1 erfolgt das verformen der miteinander verschweißten Behälterteile oder Teilbehälterteile 2 und 3 zu dem Behälter oder Teilbehälter 1 durch ein Umformverfahren. Die Formgebung des Behälters oder Teilbehälterteiles 1 erfolgt im Ausführungsbeispiel durch ein bekanntes Abkantverfahren

Bei einem Behälter für einen Streuer, der trichterförmig ausgestaltet und dessen eine Behälterhälfte1 in Fig.5 dargestellt ist, besteht der obere Teil 2 des Behälters 1 aus rostendem Stahlblech und der untere Teil 3 des Behälters 1 aus nichtrostendem Stahlblech besteht. Hierbei sind, wie zuvor erwähnt, der Bereich 2 des Behälters aus rostendem Stahlblech mit dem Bereich 3 des Behälters aus nicht rostendem Stahlblech miteinander durch ein Laserschweißverfahren durch die Schweißnaht 4 zu dem Behälter oder Teilbehälter 1 verschweißt.

Hierbei ist es möglich, dass der obere Teil 2 des Behälters 1, der aus rostendem Stahlblech besteht, und der untere Teil 3 des Behälters 1, der aus nichtrostendem Stahlblech besteht, jeweils gleiche Blechstärken aufweisen oder verschiedene Blechstärken aufweisen. Hierbei kann bei der Ausgestaltung mit verschiedenen Blechstärken der jeweils dem stärksten Verschleiß unterliegende Bereich eine entsprechend größere Blechstärke aufweisen.

Die Verteilmaschine kann als Dünger- oder Straßenstreuer, Sämaschine, etc. ausgebildet sind.

## Patentansprüche

1. Verfahren für die Behälterfertigung einer Verteilmaschine zum Herstellen eines Behälters durch Umformung zumindest eines planen und in Form zugeschnittenen Stahlbleches zu einem Behälter oder Teilbehälter (1), **gekennzeichnet durch** folgende Schritte:
- Zuschneiden eines aus rostendem Stahlblech bestehenden oberen Behälterteiles oder Teilbehälterteiles (2),
- Zuschneiden eines aus nichtrostendem Stahlblech bestehenden unteren Behälterteiles oder Teilbehälterteiles (3),
- Verschweißen des aus rostendem Stahlblech bestehenden oberen Behälterteiles oder Teilbehälterteiles (2) mit dem aus nicht rostendem Stahlblech bestehenden unteren Behälterteil oder Teilbehälterteil (3) mittels eines Laserschweißverfahrens,
- Verformen der miteinander verschweißten Behälterteile oder Teilbehälterteile (2, 3) zu dem Behälter oder Teilbehälter (1) durch ein Umformverfahren.

2. Verfahren nach Anspruch 1, **dadurch gekennzeichnet, dass** durch ein Abkantverfahren die Formgebung des Behälters oder Teilbehälterteiles (2, 3) folgt.

## Claims

1. Method for manufacturing a hopper of a distribution machine for producing a hopper by forming at least one flat steel sheet trimmed into shape, in order to form a hopper or partial hopper (1), **characterized by** the following steps:
- trimming an upper hopper part or partial hopper part (2) composed of stainless steel sheet,
- trimming a lower hopper part or partial hopper part (3) composed of non-stainless steel sheet,
- welding the upper hopper part or partial hopper part (2) composed of stainless steel sheet to the lower hopper part or partial hopper part (3) composed of non-stainless steel sheet by means of a laser welding method,
- deforming the hopper parts or partial hopper parts (2, 3) welded to one another, to form the hopper or partial hopper (1) by a forming method.

2. Method according to Claim 1, **characterized in that** the shaping of the hopper or partial hopper part (2, 3) by means of a bending method follows.

## Revendications

1. Procédé de fabrication d'un récipient pour un épandeur pour la fabrication d'un récipient par formage d'au moins une tôle d'acier plane et découpée à la forme requise pour obtenir un récipient ou un récipient partiel (1), **caractérisé par** les étapes suivantes :
- découpe d'une partie supérieure de récipient ou d'une partie supérieure de récipient partiel (2) constituée d'une tôle d'acier non inoxydable,
- découpe d'une partie inférieure de récipient ou d'une partie inférieure de récipient partiel (3) constituée d'une tôle d'acier inoxydable,
- soudage de la partie supérieure de récipient ou de la partie supérieure de récipient partiel (2) constituée de la tôle d'acier non inoxydable et de la partie inférieure de récipient ou de la partie inférieure de récipient partiel (3) constituée d'une tôle d'acier inoxydable au moyen d'un procédé de soudage au laser,
- mise en forme des parties de récipient ou des parties de récipient partiel (2, 3) soudées ensemble pour obtenir le récipient ou le récipient partiel (1) par un procédé de façonnage.

2. Procédé selon la revendication 1, **caractérisé en ce que** la mise en forme du récipient ou de la partie de récipient partiel (2, 3) s'effectue par un procédé de pliage.
